(19) Europäisches Patentamt
European Patent Office
Office européen des brevets

(11) **EP 0 561 258 B1**

(12) **EUROPÄISCHE PATENTSCHRIFT**

(45) Veröffentlichungstag und Bekanntmachung des Hinweises auf die Patenterteilung:
**01.08.2001 Patentblatt 2001/31**

(51) Int Cl.⁷: **H04L 27/20**

(21) Anmeldenummer: **93103786.5**

(22) Anmeldetag: **09.03.1993**

(54) **Verfahren zur Erzeugung von CPM (Continuous Phase Modulation)-Signalen**

Method of generating CPM (continuous phase modulation) signals

Procédé pour engendrer des signaux MPC (modulation à phase continue)

(84) Benannte Vertragsstaaten:
**AT BE DE DK ES FR GB IT NL SE**

(30) Priorität: **18.03.1992 DE 4208728**

(43) Veröffentlichungstag der Anmeldung:
**22.09.1993 Patentblatt 1993/38**

(73) Patentinhaber: **Infineon Technologies AG
81669 München (DE)**

(72) Erfinder:
• **Baier, Paul-Walter, Prof. Dr.-Ing.
W-6750 Kaiserslautern 32 (DE)**
• **Jung, Peter, Dipl.-Phys.
W-6754 Otterberg (DE)**

(56) Entgegenhaltungen:
• **FREQUENZ Bd. 45, Nr. 7-8, Juli 1991, BERLIN, DE Seiten 186 - 191 JUNG P. ET AL.: 'Linearisierung der prim{r nichtlinearen Modulationsart MSK - eine anschauliche Darstellung'**
• **IEEE TRANSACTIONS ON COMMUNICATIONS Bd. 34, Nr. 2, Februar 1986, NEW YORK, US Seiten 150 - 160 LAURENT P. A.: 'Exact and Approximate Construction of Digital Phase Modulations by Superposition of Amplitude Modulated Pulses (AMP)'**
• **IEEE JOURNAL ON SELECTED AREAS IN COMMUNICATIONS Bd. 10, Nr. 8, Oktober 1992, NEW YORK, US Seiten 1236 - 1242 JUNG P. AND BAIER P. W.: 'On the Representation of CPM Signals by Linear Superposition of Impulses in the Bandpass Domain'**

**Beschreibung**

Die Erfindung bezieht sich auf ein Verfahren gemäß dem Oberbegriff des Patentanspruchs 1.

Es ist bekannt (Ziemer, R.E.; Peterson, R.L.: "Digital Communications and Spread Spectrum Systems", New York, Macmillan, 1985, Kap.3.3, S.117-124; Proakis, J.G.: "Digital Communications", New York, McGraw-Hill, 1989, Seiten 148 bis 186), CPM (Continuous Phase Modulation) -Signale und insbesondere einen speziellen Fall davon darstellende MSK (Minimum Shift Keying)-Signale in verhältnismäßig umständlicher Weise in zwei Schritten zu erzeugen. Der erste Schritt besteht in der digitalen Erzeugung der komplexen Einhüllenden und der zweite Schritt in der Modulation des Trägers mit der komplexen Einhüllenden.

Aufgabe der Erfindung ist es, ein demgegenüber einfach zu realisierendes Verfahren zur Erzeugung von Bandpaß-CPM-Signalen mit dem Modulationsindex 1/2 zu schaffen.

Diese Aufgabe wird bei einem gattungsgemäßen Verfahren durch die im kennzeichnenden Teil des Patentanspruchs 1 angegebenen Merkmale gelöst. Nach der Erfindung werden die Bandpaß-CPM-Signale mit Modulationsindex 1/2 unmittelbar in einem einzigen Schritt durch eine lineare Überlagerung realer Impulse gebildet. Die Erfindung beruht auf der Tatsache, daß sich die komplexe Einhüllende von CPM-Signalen mit einer linearen Überlagerung von Impulsen darstellen läßt. Von wesentlicher Bedeutung beim Verfahren nach der Erfindung ist die Einführungen einer differentiellen Codierung und die Auswahl einer geeigneten Trägerfrequenz bei der Durchführung der Tiefpaß-Bandpaß-Transformation.

Wird L = 1 gewählt, ergibt sich das sogenannte MSK (Minimum Shift Keying)-Modulationsschema.

In den Ansprüchen 2 und 3 sind zweckmäßige Vorschriften angegeben, durch die jeweils ein sehr einfacher Modulator, der näherungsweise Bandpaß-CPM-Signale erzeugt, realisiert werden kann.

Im folgenden werden die Erfindung und die zu ihrem Verständnis erforderlichen,grundlegenden Zusammenhänge erläutert.

Es wird eine CPM eines Trägers durch eine Binärdatenfolge

$$\{u_N\},\ u_N \in \{-1,+1\},\ N = 0,1,2,...,\infty, \tag{1}$$

mit der Bitdauer T betrachtet. Der Modulationsindex wird mit 1/2 angenommen. Solche CPM-Schemata bilden eine wesentliche Klasse von nichtlinearen Modulationsschemata.

Bei einer CPM mit dem Modulationsindex 1/2 bewirkt jedes Element $u_N$ der Datenfolge $\{u_N\}$ eine Bewegung des Phasenwinkels gemäß einer gewichteten und zeitverzögerten Fassung einer Phasenfunktion $\varphi(t)$. Die Phasenfunktion $\varphi(t)$ erfüllt die Beziehungen

$$\varphi(t) = 0\ \forall\ t \le 0, \tag{2}$$

$$\varphi(t)\ = \tfrac{\pi}{2}\ \forall\ t \ge LT,\ L \in \mathbb{N}, \tag{3}$$

und verbindet die konstanten Phasenverläufe (2) und (3) durch eine stetige Kurve (vgl. das zitierte Buch von Proakis: Seiten 148 bis 186). Die individuellen Eigenschaften einer spezifischen CPM werden durch die ganze Zahl L und durch den Verlauf der Phasenfunktion $\varphi(t)$ im Zeitintervall 0 < t < LT bestimmt.

Ein bekanntes Beispiel einer CPM mit dem Modulationsindex 1/2 ist das MSK (Minimum Shift Keying)-Schema. Bei MSK ist L = 1 und $\varphi(t)$ nimmt von 0 bis $\pi/2$ innerhalb des Zeitintervalls 0 < t < T linear zu. Wie alle CPM-Schemata ist MSK nichtlinear. Ein MSK-Signal s(t) läßt sich durch eine lineare Überlagerung von Impulsen darstellen. Zu diesem Zweck wird eine Datenfolge

$$\{a_N\},\ a_N \in \{-1,+1\},\ N = -1,0,1,2,...,\infty, \tag{4}$$

verwendet, die mit der ursprünglichen Datenfolge $\{u_N\}$ über eine differentielle Codierung, d.h.

$$u_N = a_{N-1} \cdot a_N,\ a_{-1} \equiv 1. \tag{5}$$

in Zusammenhang steht. Mit dem Impuls

$$D_0(t) = -2 \cdot \text{rect}\left[\frac{t-T}{2T}\right] \cdot \sin\left[(4m-1)\frac{\pi t}{2T}\right] \cdot \sin\left[\frac{\pi t}{2T}\right], \quad m \in \mathbb{N}, \tag{6}$$

und der Binärdatenfolge nach der Gleichung (4) läßt sich das MSK-Signal s(t) folgendermaßen darstellen:

$$s(t) = \sum_{N=0}^{\infty} a_N D_0(t - NT). \tag{7}$$

Das Signal s(t) hat die Mittenfrequenz

$$f_c = \frac{4m-1}{4T} \quad m \in \mathbb{N}. \tag{8}$$

Elemente $u_N$ der Datenfolge $\{u_N\}$, die gleich + 1 sind, führen zu einer Augenblicksfrequenz $f_{hoch}$ = m / T und Elemente $u_N$, die gleich - 1 sind, zu einer Augenblicksfrequenz $f_{nieder}$ = (m-1/2)/T.

Ein solches Verfahren ist im Aufsatz von Jung P. et al.: "Linearisierung der primär nicht linearen Modulationsart MSK - eine anschauliche Darstellung, in Frequenz, Bd. 45, Nr. 7-8, Juli-August 1991, Seiten 186-191, angegeben.

In Verbindung mit einer digitalen Signalverarbeitung ist die Darstellung gemäß der Gleichung (7) im Zusammenhang der Signalerzeugung im Sender und der Signalauswertung im Empfänger vorteilhaft. Der gewöhnliche digitale Ablauf zur Erzeugung von MSK-Signalen ist umständlich, weil er aus zwei Schritten besteht, nämlich der digitalen Erzeugung der komplexen Einhüllenden und der Modulation des Trägers durch die komplexe Einhüllende. Im Gegensatz zu dieser Annäherung läßt sich ein ziemlich einfacher Modulator auf der Basis der Gleichung (7) realisieren. Dieser Modulator besteht im wesentlichen aus einem Speicher, in welchem der Impuls $D_0$ (t) nach der Gleichung (6) gespeichert wird. Das MSK-Signal s(t) wird direkt durch das Herauslesen zeitverzögerter Replika $D_0$ (t - NT) des Impulses $D_0$ (t) erreicht, die mit dem laufend gültigen Binärdatenelement $a_N$ der Datenfolge $\{a_N\}$ der Gleichung (4) gewichtet werden. Wenn wegen größerer Abweichungen aufgrund von Mehrwegeempfang im Empfänger eine Entzerrung erforderlich wird, bietet die Darstellung nach der Gleichung (7) weitere Vorteile. Ausgehend von dieser Signaldarstellung ist die Antwort des Funkkanals auf den Impuls $D_0$ (t) eine ausreichende Basis für einen Entzerrungsalgorithmus. Ein weiterer Vorteil besteht darin, daß die Darstellung nach der Gleichung (7) bei Funktionsprüfungen von hergestellten MSK-Modulatoren verwendet werden kann. Zu diesem Zweck muß untersucht werden, ob das Ausgangssignal dieses Modulators den Impuls $D_0$ (t) in einer nicht verzerrten Form enthält.

Bei der Erfindung wird von der Erkenntnis ausgegangen, daß nicht nur für MSK-Signale s(t), sondern für beliebige CPM-Signale mit dem Modulationsindex 1/2 eine direkte Darstellung durch lineare Überlagerung realer Impulse ähnlich der Gleichung (7) möglich ist. Demzufolge sind die vorher erwähnten Vorteile einer solchen linearen Darstellung nicht mehr auf den Fall der MSK beschränkt. Die Erfindung basiert auf der Tatsache, daß die komplexe Einhüllende von CPM-Signalen durch eine lineare Überlagerung von Impulsen dargestellt werden kann (Laurent, P. A.: " Exact and Approximate Construction of Digital Phase Modulations by Superposition of Amplitude Modulated Pulses (AMP)", in IEEE Trans., Vol. COM-34, 1986, Seiten 150 bis 160). Diese Art von Signaldarstellung wird durch die Erfindung entscheidend weiter entwickelt, wobei die Schlüsselstellen die Einführung einer differentiellen Umcodierung und die Auswahl einer geeigneten Frequenz $f_c$ des Trägers sind, wenn eine Tiefpaß-Bandpaß-Transformation durchgeführt wird.

Im allgemeinen ist eine Anzahl von

$$M = 2^{L-1} \tag{9}$$

verschiedenen Impulsen $D_K$ (t), K = 0, 1, ..., M - 1, zur Darstellung eines CPM-Signals erforderlich. Im speziellen Fall der MSK weist L den Wert 1 auf, und es reicht deswegen ein einziger Impuls $D_0$ (t) aus. Die Gewichtungen bei der Überlagerung der Impulse $D_K$ (t) werden mit Hilfe der Datenfolge $\{a_N\}$ nach der Gleichung (4) bestimmt, die sich aus der ursprünglichen, in der Gleichung (1) abgehandelten Datenfolge $\{u_N\}$ durch eine differentielle Umcodierung gemäß der Gleichung (5) ergibt.

Im folgenden wird die Bestimmung der Gewichtungen der Impulse $D_K$ (t) abgeleitet. Es soll dabei im weiteren der Zeitbereich t ≥ 0 betrachtet werden. Die komplexe Einhüllende eines CPM-Signals mit dem Modulationsindex 1/2 unter Zugrundelegung der Binärdatenfolge {$u_N$}, vgl. Gleichung (1), und der Phasenfunktion $\varphi(t)$, vgl. die Gleichungen (2) und (3), nimmt folgende Form an:

$$\underline{e}(t) = \exp\left\{ j \sum_{N=0}^{\infty} u_N \varphi(t - NT) \right\}, \quad t \geq 0. \qquad (10)$$

Mit geeignet definierten Impulsen $C_K$ (t) ist die folgende Darstellung der komplexen Einhüllenden $\underline{e}$ (t) gültig, die der Gleichung (10) im Zeitbereich t ≥ LT gleichwertig ist:

$$\begin{aligned}
\underline{e}(t) = \sum_{N=0}^{\infty} j^{\sum_{n=0}^{N} u_N} \big[ \ & C_0(t - NT) - j u_{N-1} C_1(t - NT) \\
& - j u_{N-2} C_2(t - NT) - u_{N-2} u_{N-1} C_3(t - NT) \\
& - j u_{N-3} C_4(t - NT) - u_{N-3} u_{N-1} C_5(t - NT) \\
& - u_{N-3} u_{N-2} C_6(t - NT) \\
& + j u_{N-3} u_{N-2} u_{N-1} C_7(t - NT) - ... \big], \\
& u_k \equiv 0 \quad \forall\ k < 0, \quad t \geq LT.
\end{aligned} \qquad (11)$$

Später wird noch die Bestimmung der Impulse $C_K$ (t) gezeigt. Die Impulse $C_K$ (t) mit den Indizes

$$K > K_{max} = M - 1, \qquad (12)$$

für M vgl. Gleichung (9), sind identisch 0 und müssen daher nicht betrachtet werden. Wenn beispielsweise L = 4 gewählt wird, beträgt gemäß den Gleichungen (9) und (11) der maximale zu betrachtende Index K

$$K_{max} = 2^{4-1} - 1 = 7. \qquad (13)$$

In der Gleichung (11) läßt sich die Binärdatenfolge {$u_N$} gemäß der Gleichung (1) durch die ähnliche Binärdatenfolge {$a_N$} , die in der Gleichung (4) definiert ist, ersetzen. Man erhält dann

$$\begin{aligned}
\underline{e}(t) = j \sum_{N=0}^{\infty} j^N a_N \big[ \ & C_0(t - NT) - j a_{N-2} a_{N-1} C_1(t - NT) \\
& - j a_{N-3} a_{N-2} C_2(t - NT) - a_{N-3} a_{N-1} C_3(t - NT) \\
& - j a_{N-4} a_{N-3} C_4(t - NT) - a_{N-4} a_{N-3} a_{N-2} a_{N-1} C_5(t - NT) \\
& - a_{N-4} a_{N-2} C_6(t - NT) \\
& + j a_{N-4} a_{N-1} C_7(t - NT) - ... \big], \\
& a_k \equiv 0, \quad \forall\ k < -1, \quad t \geq LT.
\end{aligned} \qquad (14)$$

Wenn die Trägerfrequenz $f_c$ gemäß der Gleichung (8) gewählt wird, gilt die folgende Äquivalenz:

$$\exp\left\{j2\pi f_c(t - NT)\right\} = \exp\left\{j(4m-1)\frac{\pi(t-NT)}{2T}\right\} = j^N \exp\left\{j(4m-1)\frac{\pi t}{2T}\right\} \qquad (15)$$
$$m \in \mathbb{N},$$

Für diese spezifische Trägerfrequenz $f_c$ führt die komplexe Einhüllende $\underline{e}$ (t) gemäß der Gleichung (14) zum CPM-Signal

$$
\begin{aligned}
s(t) &= \mathrm{Re}\left\{\underline{e}(t)\exp\left[j2\pi\frac{4m-1}{4T}t\right]\right\}\\
&= \sum_{N=0}^{\infty} a_N \Big\{ -C_0(t-NT)\sin\left[2\pi\frac{4m-1}{4T}(t-NT)\right]\\
&\quad + a_{N-2}a_{N-1}C_1(t-NT)\cos\left[2\pi\frac{4m-1}{4T}(t-NT)\right]\\
&\quad + a_{N-3}a_{N-2}C_2(t-NT)\cos\left[2\pi\frac{4m-1}{4T}(t-NT)\right]\\
&\quad + a_{N-3}a_{N-1}C_3(t-NT)\sin\left[2\pi\frac{4m-1}{4T}(t-NT)\right]\\
&\quad + a_{N-4}a_{N-3}C_4(t-NT)\cos\left[2\pi\frac{4m-1}{4T}(t-NT)\right]\\
&\quad + a_{N-4}a_{N-3}a_{N-2}a_{N-1}C_5(t-NT)\sin\left[2\pi\frac{4m-1}{4T}(t-NT)\right]\\
&\quad + a_{N-4}a_{N-2}C_6(t-NT)\sin\left[2\pi\frac{4m-1}{4T}(t-NT)\right]\\
&\quad - a_{N-4}a_{N-1}C_7(t-NT)\cos\left[2\pi\frac{4m-1}{4T}(t-NT)\right] + \ldots \Big\},\\
a_k &\equiv 0 \quad \forall\, k < -1, \quad t \geq LT.
\end{aligned}
\qquad (16)
$$

Nun werden die Impulse

$$
\begin{aligned}
D_0(t) &= -C_0(t)\sin\left[2\pi\frac{4m-1}{4T}t\right], & D_1(t) &= +C_1(t)\cos\left[2\pi\frac{4m-1}{4T}t\right],\\
D_2(t) &= +C_2(t)\cos\left[2\pi\frac{4m-1}{4T}t\right], & D_3(t) &= +C_3(t)\sin\left[2\pi\frac{4m-1}{4T}t\right],\\
D_4(t) &= +C_4(t)\cos\left[2\pi\frac{4m-1}{4T}t\right], & D_5(t) &= +C_5(t)\sin\left[2\pi\frac{4m-1}{4T}t\right],\\
D_6(t) &= +C_6(t)\sin\left[2\pi\frac{4m-1}{4T}t\right], & D_7(t) &= -C_7(t)\cos\left[2\pi\frac{4m-1}{4T}t\right], \ldots
\end{aligned}
\qquad (17)
$$

eingeführt. Mit diesen Impulsen nimmt das CPM-Signal gemäß der Gleichung (16) folgende Form an:

$$s(t) = \sum_{N=0}^{\infty} a_N \big[ \quad D_0(t - NT) + a_{N-2}a_{N-1}D_1(t - NT)$$
$$+ a_{N-3}a_{N-2}D_2(t - NT) + a_{N-3}a_{N-1}D_3(t - NT)$$
$$+ a_{N-4}a_{N-3}D_4(t - NT) + a_{N-4}a_{N-3}a_{N-2}a_{N-1}D_5(t - NT) \quad (18)$$
$$+ a_{N-4}a_{N-2}D_6(t - NT) + a_{N-4}a_{N-1}D_7(t - NT) + ...],$$
$$a_k \equiv 0 \quad \forall \, k < -1, \quad t \geq LT.$$

Dies ist die Darstellung des CPM-Signals s(t) durch lineare Überlagerung realer Impulse.

Die Impulse $D_K$ (t) basieren auf den Impulsen $C_K$ (t), vgl. Gleichung (17). Die Impulse $C_K$ (t) werden durch die Phasenfunktion φ(t) bestimmt. Die Anfangsbedingungen zur Berechnung der Impulse $C_K$ (t) sind die Funktionen

$$S(t) = \begin{cases} \sin[\varphi(t)] & \forall \, t < LT, \\ \sin[\frac{\pi}{2} - \varphi(t - LT)] & \forall \, LT \leq t, \end{cases} \quad (19)$$

und die binäre Darstellung

$$K = \sum_{i=1}^{L-1} 2^{i-1}\alpha_{K,i}, \quad 0 \leq K \leq M - 1, \quad \alpha_{K,i} \in \{0,1\} \quad (20)$$

des Index K. Mit der in der Gleichung (19) definierten Funktion S (t) und den in der Gleichung (20) eingeführten Binärmengen $\alpha_{K,i}$ ergeben sich folgende Impulse $C_K$ (t):

$$C_K(t) = S(t) \prod_{i=1}^{L-1} S[t + (i + L\alpha_{K,i})T], \quad 0 \leq t \leq T \cdot \min_{i=1}^{L-1}\{L(2 - \alpha_{K,i}) - i\}, \quad (21)$$
$$C_K(t) = 0 \quad sonst.$$

Die gemäß den Gleichungen (21) berechneten Impulse $C_K$ (t) lassen sich zur Darstellung der Impulse $D_K$ (t) in die Gleichungen (17) einsetzen.

Im folgenden wird das erfindungsgemäße Verfahren zur Erzeugung von CPM-Signalen noch anhand von dreizehn Figuren erläutert.

Es zeigen

Fig. 1      das Blockschaltbild einer Schaltung zur Durchführung des Verfahrens nach der Erfindung,

Fig. 2      in einer graphischen Darstellung Phasenfunktionen für ein Modulationsschema des Typs LREC mit h = 1/2 für verschiedene L (L = 1,2,3),

Fig. 3 bis 5      Beispiele von Impulsen $D_K$ (t) für die in Fig. 2 dargestellten Arten von LREC mit h = 1/2,

Fig. 6      in einer graphischen Darstellung Phasenfunktionen für ein sogenanntes LRC-Modulationsschema mit h = 1/2; L = 1, 2, 3,

Fig. 7 bis 9      Beispiele von Impulsen $D_K$ (t) für das in Fig. 6 dargestellte Modulationsschema LRC mit h = 1/2,

Fig.10      in acht Darstellungen acht Impulse $D_K$ (t) für ein GMSK-Modulationsschema mit L = 4, welches im europäischen digitalen Mobilfunksystem GSM Anwendung findet,

Fig.11 bis 13      die Verläufe verschiedener GMSK-Signale.

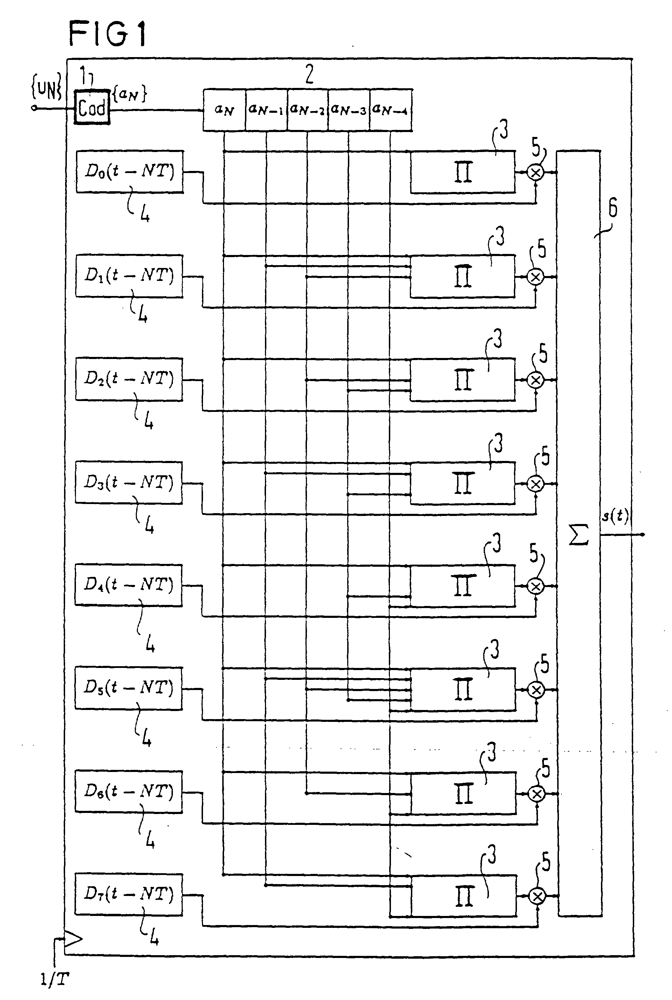

Die Darstellung eines CPM-Signals gemäß der Gleichung (18) läßt sich als Basis der in Fig. 1 in Blockschaltbildform dargestellten Schaltung zur Durchführung des Verfahrens nach der Erfindung ansehen. In der Schaltung nach Fig. 1 wird das Verfahren nach der Erfindung für den Fall L = 4 abgewickelt. Der in Fig. 1 dargestellte CPM-Modualator besteht aus einem differentiellen Umcodierer 1, einem Schieberegister 2, acht Produkbildnern 3, acht Speichern 4, in denen die Impulse $D_K$ (t), K = 0, 1, ... 7 gespeichert sind, acht Multiplizierern 5 und einem Summenbildner 6. Der dargestellte Modulator wird mit einer Rate 1/T getaktet.

Der differentielle Umcodierer 1 codiert die ursprüngliche Binärdatenfolge $\{u_N\}$ so um, daß daraus die Binärdatenfolge $\{a_N\}$ erhalten wird, siehe die Gleichungen (1) und (4). Im Schieberegister 2 werden die Elemente $a_N$, $a_{N-1}$, $a_{N-2}$, $a_{N-3}$ und $a_{N-4}$ der Datenfolge $\{a_N\}$ gebildet, die zur Erzeugung der Wichtungen der Impulse $D_K$ (t) in den Produktbildnern 3 erforderlich sind. Jeder Taktimpuls verursacht bei den Speichern 4 die Ausgabe der Impulse $D_K$ (t), welche in den Multiplizierer 5 mit ihren geeigneten Wichtungen multipliziert werden. Die Ausgangssignale der Multiplizierer 5 werden im Summenbildner 6 summiert. Am Ausgang des Summenbildners 6 entsteht dann das endgültige CPM-Signal s(t).

In der folgenden Tabelle ist noch die Funktion des Umcodierers 1 aufgelistet, d.h. der Übergang von $\{u_N\}$ auf $\{a_N\}$.

| | $N$ | -1 | 0 | 1 | 2 | 3 | 4 | 5 | 6 | 7 | 8 | 9 |
|---|---|---|---|---|---|---|---|---|---|---|---|---|---|
| $\{u_k\}$ | $u_N$ | — | +1 | -1 | +1 | +1 | -1 | -1 | +1 | -1 | +1 | -1 |
| $\{a_k\}$ | $a_N$ | +1 | +1 | -1 | -1 | -1 | +1 | -1 | -1 | +1 | +1 | -1 |

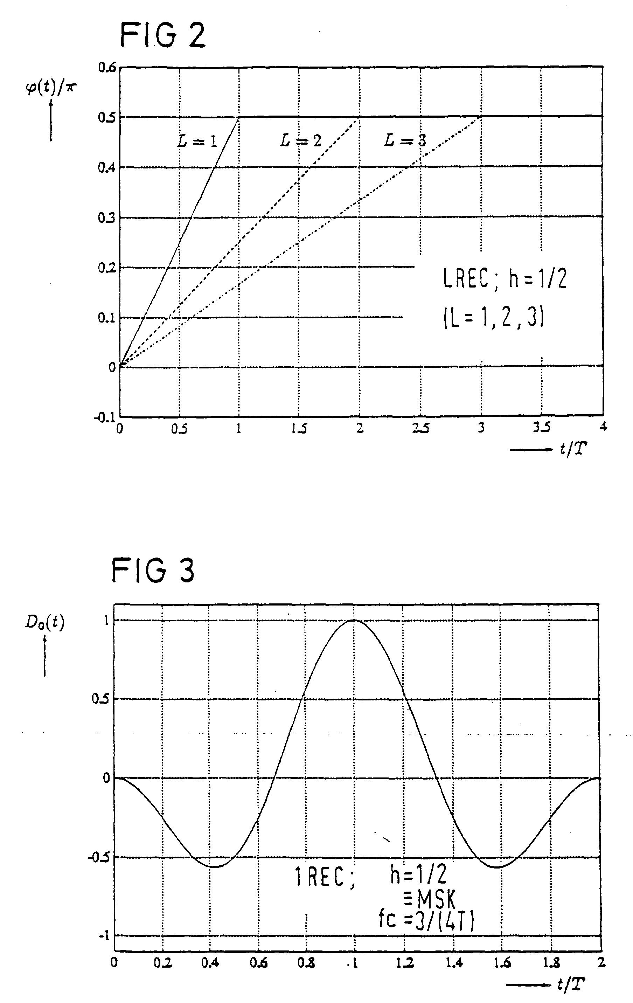

Im folgenden werden anhand der Figuren 2 bis 13 praktische Beispiele der Impulse $D_K$ (t) von verschiedenen CPM-Signalen erläutert. Am Anfang dieser Beispielsfolge werden die Impulse $D_K$ (t) für die lineare Phasenfunktion

$$\varphi(t) = \frac{\pi t}{2LT} \quad 0 \le t \le LT, \quad L \in \mathbb{N}, \tag{22}$$

für die Fälle L = 1, 2, 3 berechnet. Diese drei Phasenfunktionen sind in Fig. 2 dargestellt. Die sich ergebenden Impulse $D_K$ (t) zeigen die Figuren 3, 4 und 5 für eine Trägerfrequenz $f_c$ = 3/ (4T). Im Fall L = 1 (Fig. 3) wird das Modulationsschema MSK erzeugt. Die anderen beiden Fälle sind eine Verallgemeinerung des MSK-Modulationsschemas mit einer linearen Phasenfunktion φ(t) gemäß der Gleichung (22).

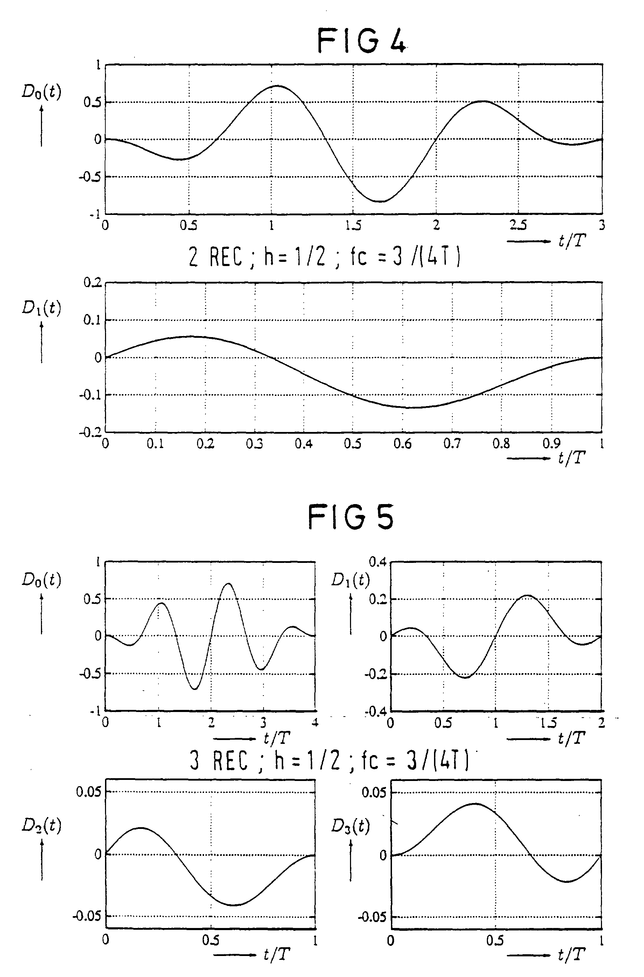

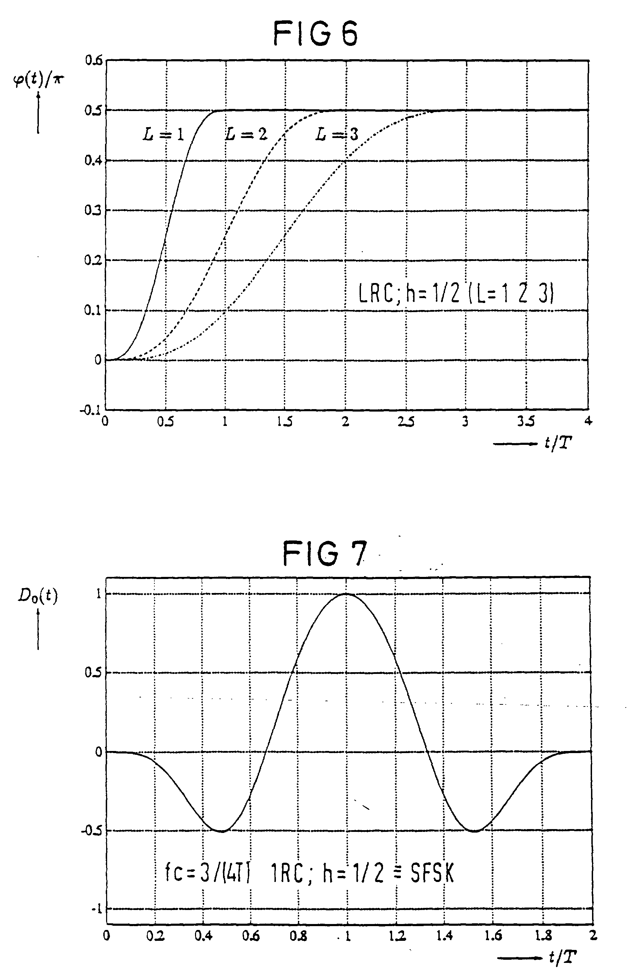

Modulationsschemata dieses Typs werden LREC mit h = 1/2 und der Dauer LT der Phasenfunktion φ(t) ge-nannt. In den Figuren 4 und 5 kann man erkennen, daß die Impulse $D_o$ (t) von 2REC mit h = 1/2 und 3 REC mit h = 1/2 den Hauptanteil der Signalenergie enthalten, wogegen die anderen Impulse in mehr oder weniger vernachlässigbarer Weise zur Signalenergie beitragen.

Als nächstes wird der Fall eines generalisierten Typs von Sinusoidal Frequency Shift Keying (SFSK), nämlich LRC mit der Dauer LT der Phasenfunktion

$$\varphi(t) = \frac{\pi t}{2LT} - \frac{1}{4}\sin\left\{\frac{2\pi t}{LT}\right\} \quad 0 \le t \le LT, \quad L \in \mathbb{N}, \tag{23}$$

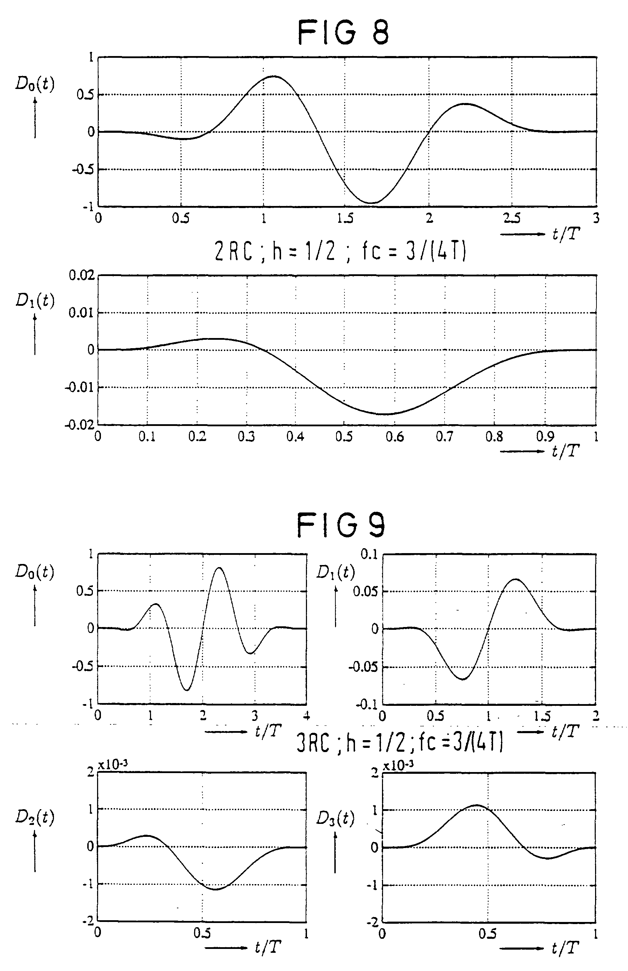

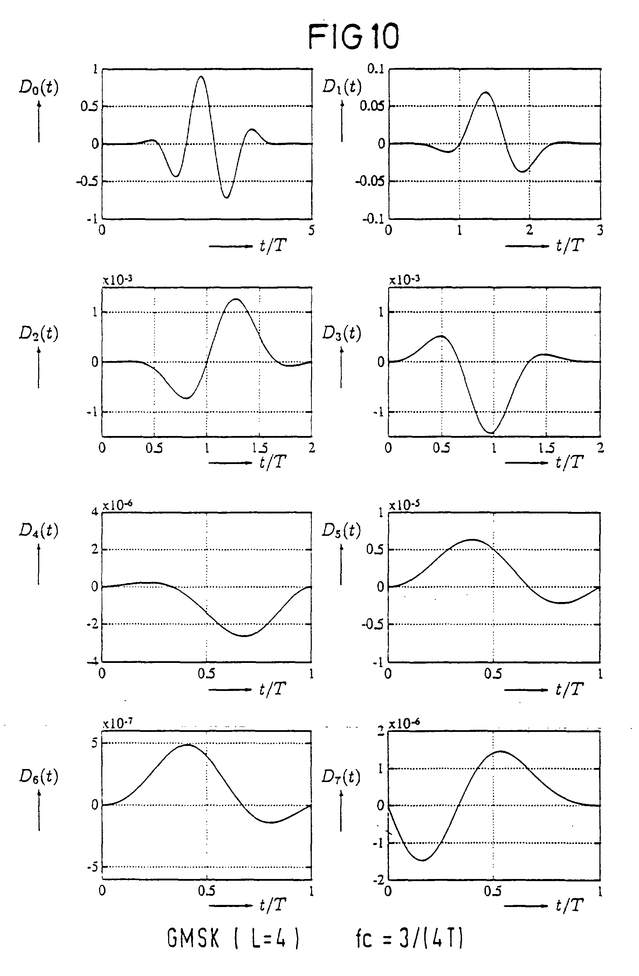

der Dauer LT betrachtet. Diese Phasenfunktionen von 1RC mit h=1/2 (identisch mit SFSK), 2RC mit h = 1/2 und 3RC mit h = 1/2 sind in Fig. 6 dargestellt. Die entsprechenden Impulse $D_K$ (t) für die Trägerfrequenz $f_c$ = 3 / (4T) zeigen die Figuren 7, 8 und 9. In den Figuren 8 und 9 ist zu erkennen, daß die Impulse $D_o$ (t) von LRC mit h = 1/2 den größten Anteil der Signalenergie enthalten, wogegen die anderen Impulse an der Signalenergie nur in einer mehr oder weniger vernachlässigbaren Höhe beitragen.

In einem weiteren Beispiel sind die Impulse $D_K$ (t) für GMSK-Modulation dargestellt, die im europäischen digitalen Mobilfunksystem Anwendung findet. Beim GMSK-Modulationsschema müßte der Wert L theoretisch so gewählt werden, daß er gleich unendlich wird. Zahlenmäßige Untersuchungen haben jedoch gezeigt, daß eine Wahl von L = 4 ausreichend ist. Wird L größer als 4 gewählt, ergeben sich keine erheblichen Änderungen mehr. In Fig. 10 sind die acht Impulse $D_K$ (t) von GMSK gemäß der Norm gezeigt und zwar für den Fall L = 4 und $f_c$ = 3 / (4T). Aus Fig. 10 läßt sich ableiten, daß Impulse $D_K$ (t) mit Indices, die größer als 1 sind, nicht mehr besonders wirksam sind und vernachlässigt werden können, wenn das GMSK-Signal erzeugt werden soll. Es ist deshalb für die Signalerzeugung ausreichend, die Impulse $D_o$ (t) und $D_1$ (t) zu betrachten.

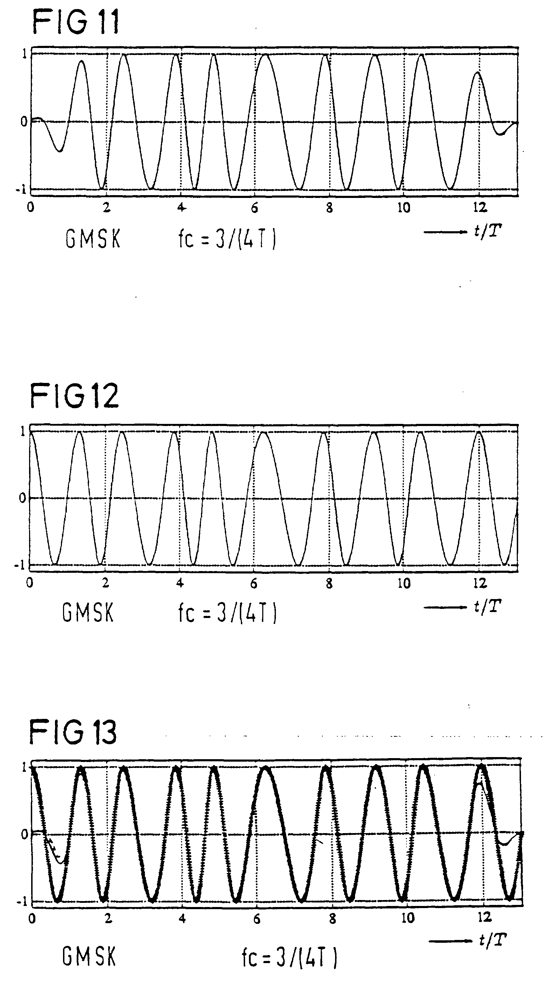

Fig. 11 zeigt ein GMSK-Signal, das unter Verwendung der Binärdatenfolge {$a_k$} der vorher dargestellten Tabelle und der Impulse $D_o$ (t) und $D_1$ (t) erzeugt wurde. Fig. 12 zeigt ein GMSK-Signal, das unter Verwendung der Datensequenz {$u_k$} aus der erwähnten Tabelle und der Phasenfunktion φ(t) erzeugt wurde. In Fig. 13 sind die Signale nach den Figuren 11 und 12 übereinander gelegt, so daß man erkennen kann, daß die Signale für den Zeitbereich t ≥ 4T identisch sind. Man kann daraus entnehmen, daß die Gültigkeit der Gleichung (18) bewahrt ist.

Ein Überblick über Modulationsmethoden im Zusammenhang mit CPM ist aus dem Buch von Anderson, J. B.; Aulin, T.; Sundberg, C.-E.: "Digital Phase Modulation", New York, Plenum, 1986, Seiten 52 und 53 zu entnehmen.

Empfangsmöglichkeiten für CPM-Signale sind im Aufsatz von Kaleh, G.K.: "Simple Coherent Receivers for Partial Response Continuous Phase Modulation" in "IEEE Journal on Selected Areas in Communication", Vol.7,No.9, Dez. 1989, Seiten 1427-1436 angegeben.

**Patentansprüche**

1. Verfahren zur mit einer Taktrate 1/T ablaufenden Erzeugung einer einen Modulationsindex von 1/2 aufweisenden Bandpaß-Continuous Phase Modulation eines Trägers mit einer eine Bitdauer T aufweisenden Binärdatenfolge

$$\{u_N\},\ u_N \in \{-1,+1\},\ N = 0,1,2,...,\infty,$$

deren Elemente $u_N$ jeweils eine Phasenbewegung gemäß einer Phasenfunktion φ(t) bewirken, wobei die Phasenfunktion φ(t) zwei über eine stetige Kurve verbundene Randbeziehungen

$$\varphi(t) = 0\ \forall\ t \leq 0,$$

$$\varphi(t)\ =\ \frac{\pi}{2}\ \ \forall\ t \geq LT,\ L \in \mathbb{N},$$

erfüllt und die besonderen Eigenschaften der jeweiligen Continuous Phase Modulation durch die ganze Zahl L und durch den Verlauf der Phasenfunktion φ(t) im Zeitintervall 0 < t < LT bestimmt werden, die ursprüngliche Binärdatenfolge {$u_N$} durch eine differentielle Vorcodierung (I) in eine gewandelte Binärdatenfolge {$a_N$} umcodiert wird, als Mittenfrequenz des Trägers eine Frequenz

$$f_c = \frac{4m - 1}{4T}\quad m \in \mathbb{N}$$

ausgewählt wird, dadurch gekennzeichnet, daß L größer als 1 ist, daß in einem mit dem Takt T arbeitenden Schieberegister (2) die Elemente $a_N$, $a_{N-1}$, $a_{N-2}$, ..., $a_{N-L}$ der Binärdatenfolge {$a_N$} gebildet werden, daß in $2^{L-1}$ Speichern (4) jeweils ein Impuls $D_K$, k = 0, 1, ..., $2^{L-1}$-1, gespeichert wird, daß bei jedem Taktimpuls von jedem der K Speicher ein Impuls $D_K$(t) an einen ersten Eingang eines jeweils einem Speicher zugeordneten Multiplizierers (5) zugeführt wird, daß dem zweiten Eingang der K Multiplizierer jeweils ein von den Elementen $a_N$ bis $a_{N-L}$ abgeleitetes und nach geeigneter Auswahl dann in einem von K Produktbildnern (3) verarbeitetes Wichtungssignal eingegeben wird, daß die Ausgangssignale aller K Multiplizierer dann in einem Summenbildner (6) summiert werden und daß vom Ausgang des Summenbildners das endgültige Bandpaß-Continuous Phase Modulation Signal abgenommen wird.

2. Verfahren nach Anspruch 1,
**dadurch gekennzeichnet**, daß nur $D_o$(t) Berücksichtigung findet, die anderen Impulse $D_K$(t), $1 \leq K \leq 2^{L-1}$-1 jedoch vernachlässigt werden.

3. Verfahren nach Anspruch 1,
**dadurch gekennzeichnet**, daß nur die ersten $\bar{K}$ < $2^{L-1}$-1 Impulse $D_K$(t) Berücksichtigung finden, die anderen Impulse $D_K$(t), $\bar{K}$ < K $\leq 2^{L-1}$-1 jedoch vernachlässigt werden.

**Claims**

1. Method for generating at a clock-pulse rate of 1/T a bandpass continuous phase modulation, having a modulation index of 1/2, of a carrier with a binary data sequence

$$\{u_N\}, u_N \in \{-1,+1\}, N = 0,1,2....,\infty,$$

having a bit duration T, whose elements $u_N$ in each case effect a phase movement in accordance with a phase function $\varphi(t)$, the phase function $\varphi(t)$ fulfilling two boundary conditions connected via a continuous curve

$$\varphi(t) = 0 \ \forall \ t \le 0,$$

$$\varphi(t) = \frac{\pi}{2} \ \forall \ t \ge LT, L \in N,$$

and the particular properties of the respective continuous phase modulation being determined by the whole number L and by the characteristic of the phase function $\varphi(t)$ in the time interval $0 < t < LT$, the original binary data sequence $\{u_N\}$ being re-coded by a differential pre-coding (1) into a converted binary data sequence $\{a_N\}$, and a frequency

$$f_c = \frac{4m-1}{4T} \ m \in N$$

being selected as centre frequency of the carrier, characterized in that L is greater than 1, in that the elements $a_N$, $B_{N-1}, a_{N-2},..., a_{N-L}$ of the binary data sequence $\{a_N\}$ are formed in a shift register (2) operating with the clock pulse T, in that a pulse $D_K$, K = 0, 1, ..., $2^{L-1}$ - 1, is respectively stored in $2^{L-1}$ memories (4), in that for each clock pulse from each of the K memories a pulse $D_k(t)$ is fed to a first input of a multiplier (5) assigned in each case to a memory, in that a weighting signal, which is derived from the elements $a_N$ to $a_{N-L}$ and is then processed after appropriate selection in one of K multipliers (3), is respectively input at the second input of the K multipliers, in that the output signals of all the K multipliers are then summed in a summer (6), and in that the final bandpass continuous phase modulation signal is tapped from the output of the summer.

2. Method according to Claim 1, characterized in that only $D_0(t)$ is considered, whereas the other pulses $D_K(t)$, $1 \le K \le 2^{L-1}-1$ are neglected.

3. Method according to Claim 1, characterized in that only the first $\bar{K} < 2^{L-1}-1$ pulses $D_K(t)$ are considered, whereas the other pulses $D_K(t)$, $\bar{K} < 2^{L-1}-1$ are neglected.

**Revendications**

1. Procédé de production se déroulant à un débit cadencé 1/T d'une modulation passe-bande en phase continue, ayant un coefficient de modulation de 1/2, d'une porteuse par une séquence de données binaires ayant une durée T de bit

$$\{u_N\}, u_N \in \{-1, +1\}, N = 0,1,2,...,\infty,$$

dont les éléments $U_N$ provoquent chacun un déplacement de phase suivant une fonction $\varphi(t)$ de phase, la fonction $\varphi(t)$ de phase satisfaisant deux conditions aux limites liées par l'intermédiaire d'une courbe continue

$$\varphi(t) = 0 \ \forall \ t \le 0,$$

$$\varphi(t) = \frac{\pi}{2} \ \forall \ t \ge LT, L \in N,$$

et les propriétés particulières de la modulation à phase continue associée étant déterminées par le nombre L entier et par la variation de la fonction $\varphi(t)$ de phase dans l'intervalle de temps $0 < t < LT$, la séquence $\{U_N\}$ de données binaires initiales étant transcodée par un précodage (1) différentiel en une séquence $\{a_N\}$ de données binaires converties, une fréquence

$$f_c = \frac{4m-1}{4T} \quad m \in N$$

étant choisie comme fréquence moyenne de la porteuse, caractérisé en ce que L est supérieur à 1, en ce que les éléments $a_N$, $a_{N-1}$, $a_{N-2}$, ..., $a_{N-L}$ de la séquence $\{a_N\}$ de données binaires sont formés dans un registre (2) à décalage travaillant à la cadence T, en ce qu'il est mis en mémoire dans $2^{L-1}$ mémoires (4) respectivement fois une impulsion $D_K$ de modulation en phase continue, en ce que, à chaque impulsion de cadence, il est envoyé par chacune des K mémoires une impulsion $D_K (T)$ à une première entrée d'un multiplicateur (5) associé chaque fois à une mémoire, en ce qu'il est entré à la deuxième entrée du multiplicateur K chaque fois un signal de pondération dérivé des éléments $a_N$ à $A_{N-L}$ et traité après sélection appropriée ensuite dans l'un de K générateurs (3) de produits, en ce que les signaux de sortie de tous les K multiplicateurs sont ensuite sommés dans un générateur (6) de somme et en ce que le signal passe-bande, K=0, 1, ..., $2^{L-1}$, définitif est prélevé de la sortie du générateur de somme.

2. Procédé suivant la revendication 1, caractérisé en ce que seul $D_o(t)$ est pris en considération, les autres impulsions $D_K(t)$, $1 \leq K \leq L^{L-1}-1$ étant cependant négligées.

3. Procédé suivant la revendication 1, caractérisé en ce que seuls les $\bar{K} < 2^{L-1}-1$ premières impulsions $D_K(t)$ sont prises en compte, les autres impulsions $D_K(t)$, $\bar{K} < K \leq 2^{L-1} -1$ étant cependant négligées.

# FIG 1

## FIG 2

LREC; h=1/2
(L=1,2,3)

## FIG 3

1REC; h=1/2
≡MSK
fc =3/(4T)

# FIG 4

$D_0(t)$

2 REC ; h = 1/2 ; fc = 3 /(4T)

$D_1(t)$

# FIG 5

$D_0(t)$

$D_1(t)$

3 REC ; h = 1/2 ; fc = 3/(4T)

$D_2(t)$

$D_3(t)$

13

## FIG 6

$\varphi(t)/\pi$

$L = 1$    $L = 2$    $L = 3$

LRC; h = 1/2 (L = 1 2 3)

$t/T$

## FIG 7

$D_0(t)$

fc = 3/(4T)  1RC; h = 1/2 ≡ SFSK

$t/T$

14

# FIG 8

$2RC ; h = 1/2 ; fc = 3/(4T)$

# FIG 9

$3RC ; h = 1/2 ; fc = 3/(4T)$

# FIG 10

GMSK ( L=4 )    fc = 3/(4T)

## FIG 11

GMSK          fc = 3/(4T)          ⟶ t/T

## FIG 12

GMSK          fc = 3/(4T)          ⟶ t/T

## FIG 13

GMSK          fc = 3/(4T)          ⟶ t/T

17